(19) Europäisches Patentamt
European Patent Office
Office européen des brevets

(11) **EP 0 904 561 B1**

(12) **EUROPÄISCHE PATENTSCHRIFT**

(45) Veröffentlichungstag und Bekanntmachung des Hinweises auf die Patenterteilung:
**24.11.2004 Patentblatt 2004/48**

(51) Int Cl.⁷: $G02F\ 1/39$, $H04N\ 9/31$

(21) Anmeldenummer: **98912500.0**

(22) Anmeldetag: **24.03.1998**

(86) Internationale Anmeldenummer:
**PCT/EP1998/001722**

(87) Internationale Veröffentlichungsnummer:
**WO 1998/044387 (08.10.1998 Gazette 1998/40)**

(54) **VERFAHREN UND VORRICHTUNG ZUM ERZEUGEN MINDESTENS DREIER LICHTBÜNDEL UNTERSCHIEDLICHER WELLENLÄNGEM INSBESONDERE FÜR EINE FARBIGE BILDDARSTELLUNG**

METHOD AND DEVICE FOR PRODUCING AT LEAST THREE LIGHT BUNDLES OF DIFFERING WAVELENGTHS, SPECIALLY FOR A COLOR DISPLAY

PROCEDE ET DISPOSITIF POUR PRODUIRE AU MOINS TROIS FAISCEAUX LUMINEUX DE DIFFERENTES LONGUEURS D'ONDES, NOTAMMENT POUR UNE REPRESENTATION COULEUR

(84) Benannte Vertragsstaaten:
**AT BE CH DE DK ES FI FR GB IE IT LI NL SE**

(30) Priorität: **01.04.1997 DE 19713433**

(43) Veröffentlichungstag der Anmeldung:
**31.03.1999 Patentblatt 1999/13**

(73) Patentinhaber: **Jenoptik LDT GmbH**
**07548 Gera (DE)**

(72) Erfinder: **NEBEL, Achim**
**D-67655 Kaiserslautern (DE)**

(74) Vertreter: **Geyer, Werner, Dr.-Ing. et al**
**Patentanwälte**
**Geyer, Fehners & Partner**
**Perhamerstrasse 31**
**80687 München (DE)**

(56) Entgegenhaltungen:
EP-A- 0 788 015      WO-A-96/08116
DE-C- 19 504 047

- **DANIELIUS R ET AL: "Visible pulses of 100 fs and 100 mu J from an upconverted parametric generator" APPLIED OPTICS, 20 SEPT. 1996, OPT. SOC. AMERICA, USA, Bd. 35, Nr. 27, ISSN 0003-6935, Seiten 5336-5339, XP002070520**
- **SHIRAKAWA A ET AL: "Highly efficient generation of blue-orange femtosecond pulses from intracavity-frequency-mixed optical parametric oscillator" OPTICS COMMUNICATIONS, 15 JAN. 1996, ELSEVIER, NETHERLANDS, Bd. 123, Nr. 1-3, ISSN 0030-4018, Seiten 121-128, XP000629257**
- **CHEUNG E C ET AL: "Frequency upconversion experiments in an optical parametric oscillator" SOLID STATE LASERS AND NONLINEAR CRYSTALS, SAN JOSE, CA, USA, 5-7 FEB. 1995, Bd. 2379, ISSN 0277-786X, PROCEEDINGS OF THE SPIE - THE INTERNATIONAL SOCIETY FOR OPTICAL ENGINEERING, 1995, USA, Seiten 282-290, XP002070522**

EP 0 904 561 B1

**Beschreibung**

Die Erfindung bezieht sich auf ein Verfahren zum Erzeugen eines roten, grünen und blauen Lichtbündels gemäß dem Oberbegriff des Anspruchs 1. Ferner bezieht sich die Erfindung auf eine Vorrichtung zum Erzeugen eines roten, grünen und blauen Lichtbündels gemäß dem Oberbegriff des Anspruchs 3.

Wenn im folgenden der Begriff "Teillichtbündel" verwendet wird, ist damit nicht nur ein Lichtbündel gemeint, das mittels eines Strahlteilers abgetrennt wird, sondern auch ein solches Lichtbündel, das in nichtlinearen Kristallen als unkonvertierter Anteil des anregenden Strahls entsteht und ausfällt.

Eine Vorrichtung der genannten Art ist beispielsweise aus der WO 96/08116 bekannt. Obwohl sich dieser Stand der Technik ausschließlich auf die Erzeugung von roten, grünen und blauen Strahlen zum Einsatz in einem Farbvideosystem bezieht, ist diese Technik auch in der Drucktechnik einsetzbar, wobei dort die Wellenlängen nicht unbedingt gemäß der Farbempfindung des Menschen zu wählen sind, denn bei derartigen Anwendungen hängt die Farbauswahl der Laser im wesentlichen auch mit der Empfindlichkeit des zu belichtenden Films oder der zu bedruk-kenden Fläche zusammen. Weiter ist diese Technik auch nicht auf drei Farben, also nicht auf drei Lichtbündel unterschiedlicher Wellenlänge beschränkt, denn heute werden Farbbilder hoher Qualität, beispielsweise Kunstdrucke, üblicherweise mit mehr als drei Farben, im Vierfarb- oder sogar Sechsfarbdruck, hergestellt.

Wenn die Technik auch in anderen Gebieten, wie der Druckindustrie, anwendbar ist, so soll hier doch im wesentlichen die Laservideoechnik, wie sie beispielsweise aus der DE 43 06 797 C1 bekannt ist, herangezogen werden, bei der üblicherweise nur drei Laserstrahlen mit den Farben Rot, Grün und Blau eingesetzt werden. Bei einer derartigen Anwendung ist das Uchtbündel mit der kürzesten Wellenlänge blau und das mit der längsten Wellenlänge rot.

Insbesondere macht es bei dem heutigen Stand der Lasertechnik Schwierigkeiten, das benötigte kurzwelligste blaue Lichtbündel unter Verwendung kostengünstiger Laser mit genügend hoher Effizienz zu erzeugen.

In der DE 195 04 047, in der auch eine Vorrichtung zum Erzeugen eines roten, grünen und blauen Lichtbündels beschrieben ist, C1 und der WO 96/08116 wird zur Verringerung des Aufwands für die Laservideoprojektion vorgeschlagen, alle Lichtbündel mit den verschiedenen Wellenlängen für die Farben Rot, Grün und Blau aus einem einzigen Infrarotlaser mit Hilfe nichtlinearer optischer Elemente zu gewinnen. Dabei wird vor allem ein optisch parametrischer Oszillator, im folgenden OPO genannt, eingesetzt, wie er beispielsweise aus der DE 42 19 169 A1 bekannt ist. Bei einem derartigen OPO wird ein anregendes Uchtbündel in einen nichtlinearen optischen Kristall eingeleitet. Die optische Nichtlinearität führt dazu, daß neben dem anregenden Strahl, je nach Ausrichtung des Kristalls und/oder der Temperatur und/oder der Wellenlänge des anregenden Strahls, zwei weitere Strahlen unterschiedlicher Frequenzen gewonnen werden können, der Signal- und der Idlerstrahl.

Gemäß dem eingangs genannten Stand der Technik werden der Signal- und Idlerstrahl dann durch Frequenzsummenbildung oder Bildung von höheren Harmonischen über weitere nichtlineare optische Elemente in drei Lichtbündel mit den für die Laserprojektion geeigneten Wellenlängen zusammengemischt. Insbesondere wird zur effektiven Erzeugung des blauen und des roten Lichtbündels, das heißt sowohl das mit der kürzesten als auch das mit der längsten Wellenlänge, dabei zusätzlich ein Teillichtbündel des grünen Laserstrahls mitverwendet.

Für die spezielle Technik der OPOs, der Frequenzmischung und der Erzeugung höherer Harmonischer wird insbesondere auf den genannten Stand der Technik und die darin zitierten Druckschriften verwiesen.

Für die Verwirklichung dieser Technik ist vor allem die WO 96/08116 nützlich, in der verschiedenste Möglichkeiten der Erzeugung dreier Lichtbündel unterschiedlicher Wellenlänge mit OPOs angegeben sind. Diese Druckschrift enthält unter anderem auch eine Tabelle zur Materialauswahl für die OPO-Kristalle, die dann möglichen Wellenlängen für den Signal- und Idlerstrahl, bzw. zu beachtende physikalische Parameter, erforderliche Temperaturregelgenauigkeit, Betriebstemperatur sowie Schnittrichtung der Kristalle und ähnliche Angaben, die es dem Fachmann erlauben, entsprechende OPOs mit den erforderlichen Regeleinrichtungen und Heizungen zu bauen.

Beim Studium dieser Tabellen zeigt sich jedoch, daß für ein praxisgerechtes Lasersystem zur Farbdarstellung weitestgehend Kompromisse eingegangen werden müssen. Entweder ist eine hohe Temperaturgenauigkeit erforderlich, teilweise müssen die Kristalle auch bei höheren Temperaturen als der Raumtemperatur betrieben werden, oder aber die angegebenen Möglichkeiten sind auf den Einsatz von Lichtbündeln mit Wellenlängen im fernen Infrarot- bzw. im Ultravioletbereich angewiesen. Im fernen Infrarot- oder UV-Bereich ist bei vielen der angegebenen Kristalle nur eine geringe Transparenz zu erwarten, das heißt, die Kristalle absorbieren die Laserenergie teilweise, was die Phasenanpassung und dadurch die Temperaturstabilisierung für die erforderliche Regelgenauigkeit zusätzlich erschwert sowie auch zu einer verringerten Intensität für die zur Videoprojektion einsetzbaren Lichtbündel führt, also die Effizienz erniedrigt. Die Absorption kann sogar, wie Versuche gezeigt haben, die Kristalle unvorhersehbar zerstören.

Werden Kristalle bei einer gegenüber der Raumtemperatur erhöhten Betriebstemperatur eingesetzt, muß nach dem Einschalten erst aufgeheizt werden, so daß erst nach längerer Zeit eine genügend hohe Stabilität für den ordnungsgemäßen Betrieb eines Videosystems möglich ist. Diese Anfahrzeit könnte man zwar durch höhere Heizleistung und bessere Regelung verringern, dies würde jedoch einen erhöhten elektronischen Aufwand erforderlich machen.

Aufgabe der Erfindung ist es deshalb, eine Alternativlösung für die Vorichtungen zum Verfahren aus dem Stand der Technik zu finden, welche die Vorteile eines Systems zur Erzeugung mehrerer Lichtbündel unterschiedlicher Wellenlänge mit Hilfe von OPOs und weiteren nichtlinearen optischen Elementen beinhaltet, es jedoch gestattet, den Aufwand für eine praxisgerechte Lösung weitgehend zu reduzieren, und zur farbigen Bilddarstellung höher Energieausnutzung einen hohen Wirkungsgrad für Lichtbündel ermöglicht.

Die Aufgabe wird bei einem Verfahren der eingangs genannten Art dadurch gelöst, daß das blaue Lichtbündel durch Frequenzmischung eines Teillichtbündels des roten Lichtbündels mit entweder dem Signalstrahl oder einem frequenzverdoppelten Idlerstrahl mittels dem zweiten Bauelement gewonnen wird.

Übertragen auf das Beispiel mit den drei Lichtbündeln für die Videoprojektion bedeutet dies, daß bei der Erfindung im Gegensatz zu den Lösungen im Stand der Technik zur Erzeugung des roten und blauen Lichtbündels keine Frequenzmischung mit einem grünen Lichtbündel vorgenommen wird. Statt dessen hat das zur Mischung mit dem Signal- und/oder Idlerstrahl verwendete Lichtbündel dieselbe Frequenz wie das infrarote lichtbündel, mit dem der OPO angeregt wird. Aufgrund dessen ist es möglich, wie später noch anhand von Beispielen und Rechnungen gezeigt wird, die geringste bei der Erzeugung der Lichtbündel zur Farbdarstellung vorkommende Frequenz so zu wählen, daß sie im nahen Infrarotbereich und insbesondere bei einer Wellenlänge von weniger als 2000 nm auftritt.

Diese Frequenz des zum Mischen verwendeten Teilstrahls ist bei der Erfindung im wesentlichen durch die Lichtbündel mit der größten und der kleinsten Wellenlänge bestimmt, also der jeweiligen Extrema, weshalb es eine Frequenzmischung mit dem Signalund Idlerstrahl oder auch mit einem aus diesen durch Frequenzverdoppelung gewonnenen Lichtbündel ermöglicht, die bei dem Verfahren zum Einsatz kommenden Lichtbündel zur Erzeugung der Lichtbündel für eine Farbdarstellung im wesentlichen im sichtbaren Bereich bis eventuell hinab zum nahen Infrarotbereich zu wählen. Dies bringt wesentliche Vorteile für die Materialauswahl der nichtlinearen optischen Kristalle mit sich, da dann nur ein eng begrenzter Spektralbereich, in dem derartige Kristalle im allgemeinen transparent sind, erforderlich ist. Dies bedeutet, für eine praxisgerechte Lösung ergibt sich eine größere Auswahl geeigneter Kristalle mit geringen Absorptionsvenusten. Dadurch kann insbesondere auch eine Erwärmung des Kristalls infolge von Absorption und Phasenfehlanpassung verringert werden, was unter anderem auch zu einem geringeren Regelaufwand führt.

Unerwarteterweise hat sich gezeigt, daß bei praktischen Ausführungsbeispielen gemäß der erfindungsgemäßen Lösung auch nicht benötigte UV-Anteile wesentlich verringert sind. Neben der dadurch möglichen höheren Effizienz für das Lichtbündel mit der kürzesten Wellenlänge, also beim Laservideosystem für den blauen Strahl, bringt das den Vorteil, daß die Standzeiten der optischen Elemente innerhalb einer Vorrichtung zur Durchführung dieses Verfahrens verlängert werden, da deren mögliche Schädigung durch UV-Strahlung verringert wird. Aufgrund dessen wird der Wartungsbedarf für derartige Bilderzeugungssysteme gesenkt.

Ein weiterer Vorteil ergibt sich daraus, daß der grüne Strahl, also ein anderes Lichtbündel zur Farbdarstellung als die Lichtbündel mit der kürzesten und der längsten Wellenlänge, zu deren Erzeugung überhaupt nicht eingesetzt wird. Dadurch ergibt sich eine wesentlich höhere Stabilität für die Leistung der Laserstrahlen zur Farbdarstellung als bei den Ausführungsbeispielen nach dem Stand der Technik, bei denen der grüne Strahl zur Frequenzmischung miteingesetzt wurde. Bei letzteren würde sich eine Unstabilität des grünen Strahls direkt auf den blauen und roten Strahl auswirken, so daß hier prinzipiell ein wesentlich höherer Regelaufwand als bei der erfindungsgemäßen Lösung nötig ist. Auch dadurch ist der Aufwand wesentlich verringert.

Bei dem Verfahren wird das grüne Lichtbündel durch Frequenzvervielfachung aus dem Primärlichtbündel oder einem Teil von diesem gewonnen.

Dies hat den Vorteil, daß aufgrund derartiger Maßnahmen möglichst viele der mindestens drei Lichtbündel zur Farbbilddarstellung mit einem einzigen Laser erzeugt werden. Der Vorteil wird insbesondere bei drei Lichtbündeln, wie bei dem genannten Laservideoprojektionssystem, deutlich, da dann aufgrund dieser Weiterbildung alle drei Lichtbündel mit verringertem Aufwand gewonnen werden.

Insbesondere wird das grüne Lichtbündel bei derartigen Videoprojektionssystemen mit den Primärfarben Rot, Grün und Blau durch Frequenzvervielfachung erzeugt. Damit legt das Lichtbündel für Grün, mit Wellenlängen in der Größenordnung von 500 nm, dann die Wellenlänge für das Primärlichtbündel bei Verdopplung der Frequenz auf ungefähr 1000 nm bzw. bei einer Verdreifachung auf ungefähr 1500 nm fest. Das heißt, das Primärfichtbündel ist bei nicht zu hoher Freqüenzvervielfachung und damit entsprechend hohen Effizienzen auf jeden Fall zumindest auf kleinere Wellenlängen als 2000 nm festgelegt, so daß auch aufgrund dieser Weiterbildung ein enger Spektralbereich für eine Vorrichtung zur Durchführung des Verfahrens festgelegt wird, welche die oben schon genannten Vorteile aus der dadurch möglichen Kristallauswahl mit einem geringen Spektralbereich für Transparenz nach sich zieht.

Bei einer weiterführenden vorteilhaften Weiterbildung der Erfindung ist vorgesehen, daß das Primärlichtbündel zur Frequenzvervielfachung durch einen nichtlinearen optischen Kristall geleitet wird, dem ein Lichtbündel mit der Frequenz des Primärlichtbündels zur Anregung des OPOs sowie das Lichtbündel mit der doppelten Frequenz als das grüne Lichtbündel zur Bilderzeugung entnommen werden.

Diese Weiterbildung betrifft eine besonders günstige Ausgestaltung. Erstens beschränkt sich diese Weiterbildung für das Primärlichtbündel auf die halbe Frequenz des grünen Lichtbündels, also einer Wellenlänge des Primärtichtbündels von ungefähr 1000 nm, was insbesondere zu einer besonders günstigen Einengung des Spektralbereichs führt, bei dem der OPO arbeiten soll. Zweitens wird das Primärlichtbündel zur Anregung des OPOs ebenfalls aus dem Kristall zur Frequenzverdopplung entnommen, weshalb man auf zusätzliche Teilerspiegel zur Teilung des Primärlichtbündels in verschiedene Teillichtbündel verzichten kann. Vorteilhafterweise ist so ebenfalls der Aufwand verringert. Ferner wird dadurch ein maximaler Anteil der Lichtleistung des Primärlichtbündels zur Erzeugung der mindestens drei Lichtbündel ausgenutzt, so daß eine hohe Effizienz für die farbige Bilddarstellung gegeben ist.

Bei einer bevorzugten Weiterbildung der Erfindung werden die Lichtbündel mit der längsten und kürzesten Wellenlänge ohne Mischung mit dem Idierstrahl allein aus dem Signalstrahl des OPOs und einem Teillichtbündel des Primärstrahlbündels oder höheren Harmonischen von diesem erzeugt.

Bei einem OPO ist die Summe der Frequenzen von Signalstrahl und Idlerstrahl aufgrund Energieerhaltung für Photonen gleich der Frequenz des anregenden Strahls. Deshalb liegt bei dem Verfahren mit einem Idlerstrahl im femen Infrarotbereich der Signalstrahl weiterhin im Nahinfrarotbereich, wenn nicht sogar im sichtbaren Bereich. Dadurch ist zur anschließenden Frequenzmischung für die Erzeugung der Lichtbündel mit der kürzesten und der längsten Wellenlänge (blau, rot) nur ein geringer Spektralbereich erforderlich, was sich besonders günstig für die Wahl der nichtlinearen optischen Kristalle und die dadurch bedingten, vorstehend schon diskutierten Vorteile auswirkt.

Diese Weiterbildung ist also insbesondere bei einem Idlerstrahl im fernen Infrarotbereich vorteilhaft, da dieser zur Farberzeugung nicht verwendet werden muß.

Die Aufgabe wird ferner durch eine Vorrichtung der eingangs genannten Art gelöst, bei der das blaue Lichtbündel in der Optikeinrichtung ausschließlich von einem Teillichtbündel des roten Lichtbündels und entweder dem Signalstrahl oder einem frequenzverdoppelten Idlerstrahl durch Frequenzmischung mittels dem zweiten Bauelement erzeugbar ist.

Bei dieser Vorrichtung wird das Verfahren mit Hilfe einer nichtlineare optische Elemente enthattenden Einrichtung durchgeführt, wie sie ähnlich schon aus dem Stand der Technik bekannt ist. Die dort dargestellten Aufbauten für derartige Einrichtungen verdeutlichen ebenfalls aufgrund ihrer Einfachheit, daß eine praxisgerechte Vorrichtung für die Erzeugung von mindestens drei Lichtbündeln (rot, grün und blau) zur farbigen Bilddarstellung mit Hilfe der Erfindung möglich ist.

Die oben genannten Vorteile der Weiterbildungen der Erfindung bezüglich des Verfahrens lassen sich bei folgenden Weiterbildungen der Vorrichtung ebenfalls verwirklichen, bei denen

- ferner mittels des Filters oder eines weiteren Filters aus dem nichtlinearen optischen Kristall ein weiteres Lichtbündel entnehmbar ist, das als Tiaillichtbündel zur Anregung des OPOs und/oder als Teillichtbündel zur Erzeugung der Lichtbündel mit der kürzesten oder längsten Wellenlänge in die die nichtlineare optische Elemente aufweisende Einrichtung eingeleitet ist;

- und/ oder der OPO einen Kristall aufweist, mit dem ein infraroter Idlerstrahl erzeugbar ist und ausschließlich der Signalstrahl des OPOs und ein Teillichtbündel des Primärlichtbündels in die nichtlineare optische Elemente aufweisende Einrichtung eingeleitet sind.

Bei einer anderen bevorzugten Weiterbildung der Erfindung ist vorgesehen, daß der Laser Licht einer Wellenlänge zwischen 1020 und 1080 nm emittiert. Aufgrund dieser Festlegung der Wellenlänge des Lasers ist ein besonders enger Spektralbereich für die in der Vorrichtung verwendeten nichtlinearen optischen Kristalle möglich, was die oben genannten Vorteile bezüglich Materialauswahl sowie insbesondere bezüglich der Transparenz des Kristalls und dem damit verringerten Regelaufwand nach sich zieht. Weiter hat sich gezeigt, daß sich mit einem Laser dieser Wellenlänge alle drei Farben für ein Videoprojektionssystem zur Darstellung aller durch verschiedene Videonormen möglichen Farben in geeigneter Weise mit besonders geringem Aufwand erzeugen lassen.

Die folgenden Weiterbildungen der Erfindung befassen sich vor allem mit wenig aufwendigen Ausgestaltungen für die in der Vorrichtung eingesetzte, nichtlineare optische Elemente aufweisende Einrichtung.

Bei einer ersten vorteilhaften Weiterbildung dieser Art ist innerhalb der nichtlineare optische Elemente aufweisenden Einrichtung ein erster Summenfrequenzmischer vorgesehen, in den zumindest ein Teillichtbündel des Signalstrahls des OPOs sowie ein Teillichtbündel des Primärlichtbündels eingeleitet sind, wonach aus diesem Summenfrequenzmischer das Lichtbündel mit der längsten Wellenlänge (rot) entnommen wird.

Dadurch läßt sich das Lichtbündel mit der längsten Wellenlänge mit wenig Aufwand, hoher Effizienz und in einfacher Weise durch einen nichtlinearen optischen Kristall erzeugen.

Bei einer anderen bevorzugten Weiterbildung der Erfindung ist in der nichtlineare optische Elemente aufweisenden Einrichtung ein zweiter Summenfrequenzmischer vorgesehen, in den ein Teillichtbündel des Lichtbündels mit der längsten Wellenlänge (rot) sowie ein anderes aus dem Signallichtstrahl und/oder Idlerstrahl oder deren höheren Harmonischen gewonnenes Teillichtbündel eingeleitet sind, und aus dem ausgangsseitig das Lichtbündel mit der kürzesten Wellenlänge (blau) entnehmbar ist.

Auch hier ist bezüglich des Lichtbündels mit der kürzesten Wellenlänge im wesentlichen nur ein einziger Summenfrequenzmischer nötig. Es ergeben sich aber hier zwei Möglichkeiten: entweder wird ein Teillichtbündel des Signallichtbündels in den zweiten Summenfrequenzmischer eingeleitet oder dessen höhere Harmonische. Bei der ersten Möglichkeit ist der Aufwand aufgrund der geringeren Zahl von optischen Elementen niedriger.

Bei der zweiten Möglichkeit wird zwar ein weiterer nichtlinearer Kristall zur Erzeugung der höheren Harmonischen eingesetzt, trotzdem läßt sich damit der Aufwand verringern, wenn durch diesen Aufbau die Effizienz erhöht wird.

Von letzterer Möglichkeit macht die folgende Weiterbildung in vorteilhafter Weise Gebrauch, wobei der frequenzverdoppelte Idlerstrahl zum Gewinnen des Lichtbündels mit der kürzesten Wellenlänge (blau) eingesetzt wird.

Bei dieser Weiterbildungen der Erfindung wird ein Frequenzverdoppler verwendet, in den zumindest ein Teillichtbündel des Idlerstrahls einfällt, und das durch den Frequenzverdoppler frequenzverdoppelt gewonnene Lichtbündel in den zweiten Summenfrequenzmischer eingeleitet. Dabei wird dem Summenfrequenzmischer auch das Lichtbündel oder ein Teil davon mit der längsten Wellenlänge (rot) zugeführt

Wie aus den vorhergehenden Weiterungen der Erfindung deutlich wurde, arbeiten diese unter anderem mit der Unterteilung des Primärlichtbündels, des Signalstrahls oder aber des Lichtbündels mit der längsten Wellenlänge, im Beispiel des Videosystems der Farbe Rot, in Teillichtbündel. Eine derartige Strahlteilung kann beispielsweise mit Hilfe teildurchlässiger Spiegel durchgeführt werden, oder auch dadurch, daß ein bestimmtes Teillichtbündel aus den nichtlinearen optischen Elementen nach spektraler Zerlegung unter geeignetem Winkel ausgekoppelt wird. Für das letzte Beispiel sei diesbezüglich das aus dem OPO austretende Teillichtbündel mit der Frequenz des Primärlichtbündels genannt, welches ebenfalls zur Mischung in der nichtlineare optische Elemente aufweisenden Einrichtung als Teillichtbündel des Primärlichtbündels einsetzbar ist. Insbesondere können die jeweiligen Lichtbündel nach dem gemeinsamen Verlassen der optisch nichtlinearen Kristalle durch geeignete dichroitische Spiegel aufgetrennt werden.

Unabhängig davon wie die Teilung der Lichtbündel vorgenommen wird, kann die Effizienz der Vorrichtung mit der richtigen Dimensionierung der Anteilfaktoren bei geringem Aufwand erhöht werden. Diesbezüglich ist bei einer vorzugsweisen Weiterbildung der Erfindung vorgesehen, daß bei einer Teilung in Teillichtbündel der jeweilige Anteilfaktor für eine maximale Leistung zur Darstellung von Weiß bei Mischung der drei Lichtbündel zur farbigen Bilddarstellung bestimmt ist. Dann ist die Laserleistung für eine Farbdarstellung optimal ausgelegt.

Bei dieser Weiterbildung werden die Anteilfaktoren aufgrund einer dem Fachmann bekannten Extremwertbestimmung gewonnen. Dafür kann für einen beliebigen jeweiligen Aufbau der Vorrichtung nach Auswahl der nichtlinearen optischen Elemente eine Gleichung für die maximale Leistung zur Darstellung der Farbe Weiß bei Mischung der mindestens drei Lichtbündel aufgestellt werden, bei der die Anteilsfaktoren als Parameter enthalten sind. Nach Ableitung der Gleichung nach diesen Parametern und Nullsetzen ergibt sich in bekannter Weise ein Gleichungssystem, das dann für optimale Parameter zur Extremwertbestimmung gelöst wird.

Neben einer derartigen analytischen Vorgehensweise empfiehlt es sich für diese Optimierung der Anteilsfaktoren femer, handelsübliche Optimierungsprogramme auf einem Computer einzusetzen. Die sich so ergebenden Anteilsfaktoren für die Teilung in Lichtbündeln führen durch diese Dimensionierung der Vorrichtung zu Lichtbündeln besonders hoher nutzbarer Effizienz für den Betrieb bei der Bilddarstellung.

Das erfindungsgemäße Verfahren und die erfindungsgemäße Vorrichtung werden im folgenden anhand der Zeichnung beispielhaft noch näher beschrieben. Es zeigen:

Fig. 1                eine schematische Darstellung für eine Vorrichtung zur Farbdarstellung ;

Fig. 2                eine schematische Darstellung eines Ausführungsbeispiels zur näheren Erläuterung der Erfindung;

Fig. 3 bis Fig. 5     verschiedene Ausführungsbeispiele zum Erzeugen von Lichtbündeln mit der kürzesten und längsten Wellenlänge für ein Laservideosystem;

Fig. 6                ein Beispiel für eine günstige Teilung des Primärlichtbündels für eine in einem Videoprojektionssystem einsetzbare Vorrichtung.

Wenn auch, wie vorstehend schon erläutert, die Erfindung in der Druckindustrie verwendbar ist, soll sie im folgenden doch vorwiegend für das Beispiel eines Videogerätes beschrieben werden, bei dem nur drei Lichtbündel eingesetzt werden. Diese Lichtbündel werden im allgemeinen mit Wellenlängen für Rot, Grün und Blau gewählt. Dabei ist dann das blaue Lichtbündel das Lichtbündel mit der kürzesten Wellenlänge und das rote das Lichtbündel mit der längsten Wellenlänge. Mit dem grünen Lichtbündel liegt ein weiteres, anderes Bündel der drei Lichtbündel zur farbigen Bilddarstellung vor. Dieses weitere Lichtbündel wird nach dem Stand der Technik üblicherweise zur Erzeugung des roten und des blauen Lichtbündels eingesetzt. Dies ist im Unterschied zum Stand der Technik bei der Erfindung, wie im nachfolgenden noch deutlicher wird, nicht erforderlich.

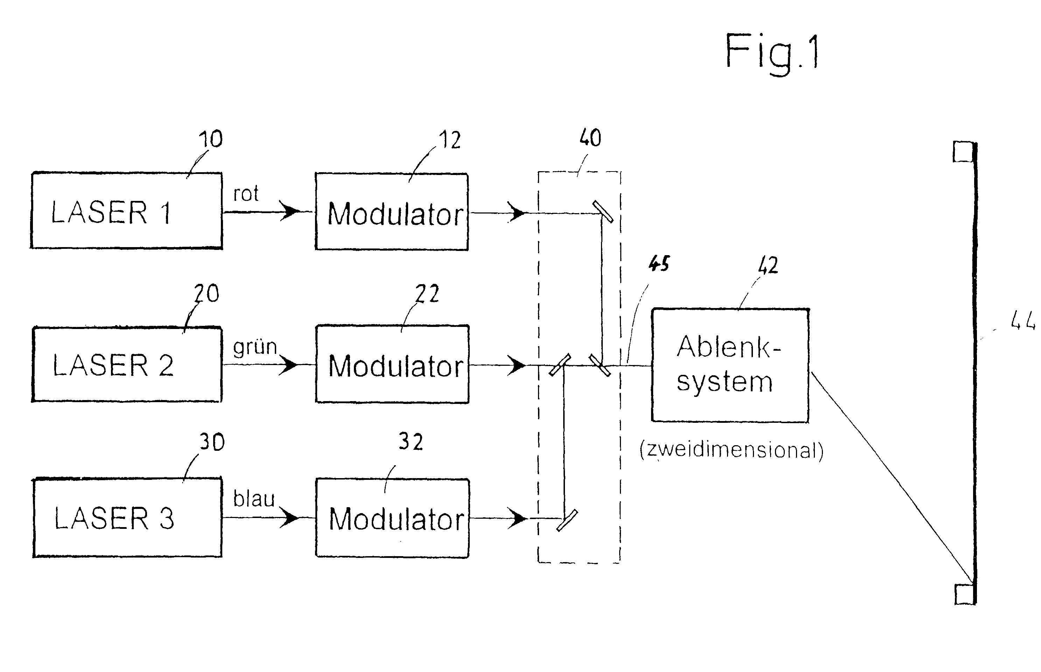

Anhand von Fig. 1 soll vorerst das Prinzip eines Videogerätes verdeutlicht werden. Zur Darstellung monochromer Teilbilder werden drei Laser 10, 20, 30 eingesetzt, üblicherweise mit Laserwellenlängen die auf dem Spektralkurvenzug im CIE-Diagramm den Farben Rot, Grün und Blau entsprechen. Diese von den Lasern 10, 20, 30 ausgesandten Laserstrahlen werden mit Modulatoren 12, 22, 32 mit der jeweiligen Farbintensität amplitudenmoduliert, die für den jeweils auf einem Schirm zu beleuchtenden Bildpunkt zur Darstellung dieser Farbe geeignet ist. Anschließend werden die drei Laserstrahlen in einem Spiegel- oder Prismensystem 40 zu einem einzigen kollinearen parallelen Lichtbündel 45 zusammengeführt, das mit einer Ablenkeinrichtung 42 auf einen Schirm 44 projiziert wird.

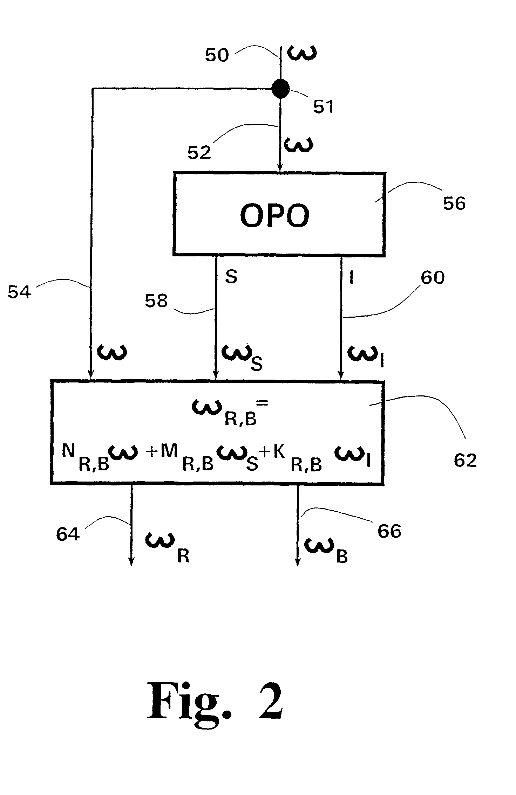

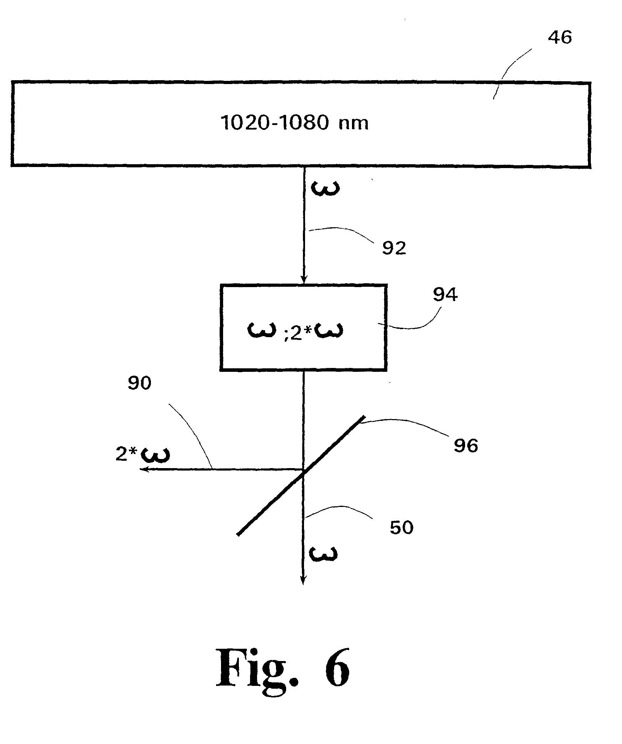

Bei derartigen Videosystemen bereitet vor allen Dingen die Erzeugung des blauen Laserstrahls mit genügend hoher Effizienz Schwierigkeiten, wenn man nicht auf sehr teure Laser ausweichen will. Mit in den folgenden Figuren 2 bis 5 gezeigten Vorrichtungen können die Laserquellen 10 und 30 ersetzt werden, um deren Lichtbündel mit genügend hoher Intensität zur erzeugen. Ferner ist es möglich, auch den Laser 20 mit Hilfe der gleichen Vorrichtung zu ersetzen, wenn weiter ein grünes Lichtbündel, wie beispielhaft anhand des Ausführungsbeispiels von Fig. 6 gezeigt wird, von den verwendeten Laserstrahlen abgeleitet wird.

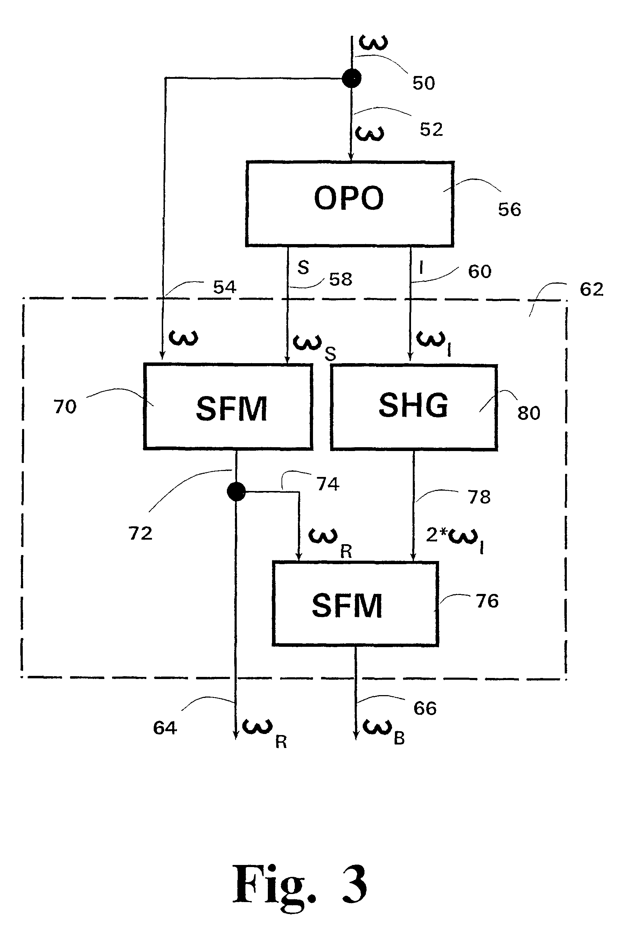

In Fig. 2 ist das Prinzip, nach dem die Vorrichtungen gemäß Fig. 3 bis 6 arbeiten, schematisch dargestellt. Aus einem in Fig. 6 gezeichneten Laser 46 wird zuerst ein primäres Lichtbündel 50 entnommen, welches, beispielsweise über halbdurchlässige Spiegel, am Punkt 51 in zwei Teillichtbündel 52 und 54 zerlegt wird. Das Teillichtbündel 52 wird dann einem optisch parametrischen Oszillator, im folgenden mit "OPO" 56 abgekürzt, zugeführt. Ein OPO enthält als wesentliches Element einen nichtlinearen optischen Kristall. Aufgrund der Nichtlinearität und bei entsprechender Ausrichtung des Kristalles lassen sich ein Signalstrahl 58 und ein Idlerstrahl 60 entnehmen. Wegen der Erhaltung der Photonenenergie gilt dabei die Beziehung, daß die Frequenz $\omega_S$ des Signalstrahls und die Frequenz $\omega_1$ des Idlerstrahls summiert die Frequenz $\omega$ des anregenden Teillichtbündels 52 ergeben.

Das Teillichtbündel 54, der Signalstrahl 58 und der Idlerstrahl 60 werden gemäß Fig. 2 einer weiteren nichtlineare optische Elemente aufweisenden Einrichtung 62 zugeführt, der dann das Lichtbündel 64 mit der kürzesten Wellenlänge und das Lichtbündel 66 mit der längsten Wellenlänge, also Rot bzw. Blau, entnommen werden.

Im Kristall des OPOs 56 wird außerdem ein Teilstrahl des Lichtbündels 52 nicht in andere Frequenzen konvertiert. Das heißt, auch aus dem OPO 56 kann ein weiteres Teillichtbündel mit der Frequenz $\omega$ entnommen werden. Dieses ist ebenfalls als Lichtbündel 54 einsetzbar, wobei dann die Effizienz der Umwandlung des primären Lichtbündels 50 mit der Frequenz $\omega$ in die roten und blauen Lichtbündel 64 bzw. 66 erhöht ist.

Wie die nichtlineare optische Elemente aufweisende Einrichtung 62 aufgebaut werden kann, wird eingehender in den Figuren 3 bis 5 dargestellt. Wichtig ist hier jedoch, daß diese Einrichtung Frequenzsummenmischer, Frequenzdifferenzmischer und Einrichtungen zum Erzeugen höherer Harmonischer aufweisen kann. Für diese optischen Elemente erhält man für die Frequenzen der ausgehenden Lichtbündel 64 und 66 folgende allgemeine Gleichungen:

$$\omega_R = N_R \cdot \omega + M_R \cdot \omega_S + K_R \cdot \omega_I$$

$$\omega_B = N_B \cdot \omega + M_B \cdot \omega_S + K_B \cdot \omega_I$$

Dabei sind die Koeffizienten $N_R$, $N_B$, $M_R$, $M_B$, $K_R$, $K_B$ ganze Zahlen. Bei ausschließlicher Verwendung von Summenfrequenzmischern sind diese immer positiv. Wenn dagegen auch Differenzfrequenzmischung in der Einrichtung 62 vorgesehen ist, können die Koeffizienten allerdings negativ werden.

Die oben angegebenen Gleichungen für $\omega_R$ und $\omega_B$ zeigen, daß die Frequenz $\omega$ bei einer Anordnung gemäß Fig. 2 durch entsprechende Wahl der Koeffizienten $N_R$, $N_B$, $M_R$, $M_B$, $K_R$, $K_B$ nahezu beliebig festgelegt werden kann. Allerdings ist die Wahlfreiheit wegen der vorstehend genannten, sich aus der Energieerhaltung ergebenden Beziehung

$$\omega_I = \omega - \omega_S$$

weiter eingeschränkt.

Durch Einsetzen dieser Gleichung in obiges Gleichungssystem erhält man vier unabhängige Koeffizienten

$$\omega_R = (N_R + K_R) \cdot \omega + (M_R - K_R) \cdot \omega_S$$

$$\omega_B = (N_B + K_B) \cdot \omega + (M_B - K_B) \cdot \omega_S$$

Unter der Voraussetzung, daß die höchste Leistung eines derartigen Systems dann erreicht werden kann, wenn $\omega_S$ ungefähr ½ $\omega$ ist, ergeben sich weitere Beziehungen, die für eine Abschätzung der Koeffizienten verwendet werden können:

$$\omega_R \approx \left( N_R + \frac{1}{2} M_R + \frac{1}{2} K_R \right) \cdot \omega$$

$$\omega_B \approx \left( N_B + \frac{1}{2} M_B + \frac{1}{2} K_B \right) \cdot \omega$$

Bei der Forderung, daß die verwendeten nichtlinearen Kristalle sowohl bei $\omega$ als auch bei $\omega_R$ und $\omega_B$ möglichst transparent sein sollten, wird man $\omega$ so wählen, daß sich eine Wellenlänge kleiner als 2000 nm ergibt, damit möglichst nur Frequenzen im nahen Infrarotbereich vorkommen. Für die Wellenlänge des blauen Strahls bei ungefähr 400 nm und für den roten Strahl bei ungefähr 600 nm ergibt sich so, daß man für die günstigste Auswahl von Kristallen die Forderung wählen sollte:

$$\left| N_R + \frac{1}{2} M_R + \frac{1}{2} K_R \right| \leq 2$$

$$\left| N_B + \frac{1}{2} M_B + \frac{1}{2} K_R \right| \leq 4$$

Diese sich so ergebende Einschränkung für die Koeffizienten ist außerordentlich vorteilhaft. Die Größe der Koeffizienten steht nämlich mit den Anzahl der nichtlinearen optischen Elemente in der Einrichtung 62 in direktem Zusammenhang. Aufgrund der angegebenen Forderung ist zu erwarten, daß man die Einrichtung 62 immer mit weniger als vier nichtlinearen optischen Elementen verwirklichen kann, was vor allem durch die Ausführungsbeispiele von Fig. 3 bis 5 deutlicher wird.

Diese Abschätzungen zeigen daher, daß man beim Ausführungsbeispiel von Fig. 2 unter Verwendung von ausschließlich in einem engen Spektralbereich auftretenden Frequenzen, im nahen infraroten bis zum blauen Bereich, mit einer nur minimalen Anzahl nichtlinearer optischer Kristalle und damit auch einer geringen Anzahl von Strahlteilern und Spiegeln auskommt. Für die Vorrichtung nach Fig. 2 ist also nur ein geringer Aufwand erforderlich.

Weiter ist es wegen der betrachteten Einschränkung des Spektralbereichs zwischen 2000 nm und 400 nm möglich, nichtlineare optische Elemente, wie beispielsweise aus der WO 96/08116 bekannt, einzusetzen, die sogar bei Raumtemperatur mit geringem Regelaufwand betrieben werden können. Außerdem läßt sich das Ausführungsbeispiel von Fig. 2 mit besonders hoher Effizienz auslegen, da derartige Kristalle in dem vorgesehenen engen Spektralbereich mit genügend hoher Transparenz bekannt sind.

In den Figuren 3 bis 5 sind einige Ausführungsbeispiele zur näheren Erläuterung der Einrichtung 62 gezeigt.

In allen diesen Beispielen ist ein einziger Summenfrequenzmischer 70 zur Erzeugung des roten Lichtbündels 64 vorgesehen. Das rote Lichtbündel 64 wird dabei durch Frequenzsummierung aus dem Teillichtbündel 54 und dem Signallichtbündel 58 oder einem Teillichtbündel von diesem (Fig. 3, 4 und 5) erzeugt.

Hierzu ist nur ein einziger optischer Kristall nötig, so daß sich auch dadurch ein entsprechend geringer Aufwand ergibt. Für diese Beispiele wurden also die Koeffizienten $N_R = 1$ und $M_R = 1$ gewählt.

Im Ausführungsbeispiel von Fig. 3 wird das aus dem Summenfrequenzmischer (SFM) 70 ausfallende Lichtbündel 72 in das rote Lichtbündel 64 und ein weiteres rotes Teillichtbündel 74 geteilt, das wiederum einem weiteren Summenfrequenzmischer 76 zugeführt wird, der zum Erzeugen des blauen Lichtbündels 66 eingesetzt ist.

Für die erfonierliche Mischung wird dem Summenfrequenzmischer dabei weiter ein Lichtbündel 78 mit der doppelten Frequenz des Idlerstrahls 60 zugeführt, das durch einen Frequenzverdoppler 80 (SHG; Second Harmonic Generator) gewonnen wird. Bei diesem Beispiel wird also die Beziehung $N_B = 1$, $M_B = 1$ und $K_B = 2$ ausgenutzt.

Insbesondere werden bei diesem Beispiel dadurch optische Elemente eingespart, daß die Koeffizienten $N_B = 1$ und $M_B = 1$ durch Abzweigung des Teillichtbündels 74 aus dem dem Summenfrequenzmischer 70 entnommenen Lichtbündel 72 realisiert werden. Für möglichst hohe Effizienz dieser Teilung beim Videoprojektionsgerät gemäß Fig. 1 sollte der Anteilsfaktor zur Teilung des Lichtbündels 72 in die Lichtbündel 74 und 64 sowie die Teilung des Primärlichtbündels 50 in die Lichtbündel 52 und 54 optimiert werden. Es hat sich gezeigt, daß die günstigste Optimierung dann erreicht wird, wenn die Teilungen so ausgelegt werden, daß eine höchstmögliche Weißleuchtdichte für die farbige Bilddarstellung erreicht wird. Der günstigste Teilungsfaktor kann entweder experimentell oder mittels der vorstehend erläuterten Rechnungen ermittelt werden.

Je nach Frequenz o könnte beim Ausführungsbeispiel von Fig. 3 die Idierfrequenz in einem Spektralbereich liegen, bei dem die Transparenz des Kristalls des OPOs 56 oder des Frequenzverdopplers 80 unzureichend ist. Eine zu hohe Absorption würde dann die Effizienz herabsetzen, oder aber auch die Kristallauswahl für den OPO 56 oder den Frequenzverdoppler 80 unnötig einschränken.

Im folgenden werden zwei Beispiele gezeigt, bei denen derartiges nicht zu befürchten ist, da dort der Idlerstrahl 60 zur Erzeugung der Lichtbündel 64 und 66 nicht verwendet wird, das heißt, man beschränkt sich dann bei der Einrichtung 62 auf die Koeffizienten $K_R = K_B = 0$. Diese Beschränkung hat vor allen Dingen vorteilhafte Auswirkungen für die Auswahl der nichtlinearen optischen Kristalle, sowohl im OPO 56 selbst als auch in der Einrichtung 62.

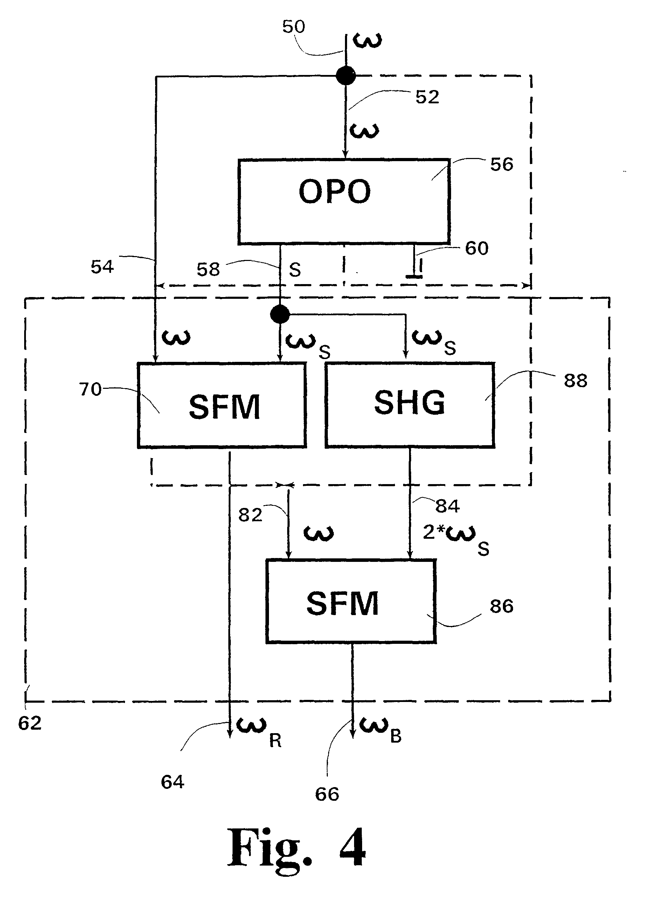

Im Ausführungsbeispiel von Fig. 4, bei dem es sich nicht um ein Ausführungsbeispiel der Erfindung, sondern um ein Beispiel handelt, das das Verständnis der Erfindung erleichtert, wird das rote Lichtbündel direkt dem Summenfrequenzmischer 70 entnommen und das blaue Lichtbündel durch ein weiteres Teillichtbündel 82 des primären Lichtbündels 50 und einem frequenzverdoppelten Teillichtbündel des Signalstrahls 58, das Lichtbündel 84, über einen zweiten Summenfrequenzmischer 86 gewonnen. Für Blau wird dabei ein Teillichtbündel vom Signalstrahl 58 abgezweigt und damit das Lichtbündel 84 über einen Frequenzverdoppler 88 erzeugt. Fig. 4 zeigt also ein Beispiel für $N_B = 1$ und $M_B = 2$.

Das Teillichtbündel 82 kann dabei durch Teilung des primären Lichtbündels 50, des Teillichtbündels 54 oder aber, ähnlich wie für das Teillichtbündel 54 gezeigt, auch aus dem Summenfrequenzmischer 70 oder femer aus dem OPO 56 entnommen werden. Außerdem kann auch das dem Frequenzverdoppler 88 zugeführte Teillichtbündel aus dem Summenfrequenzmischer 70, also dessen unkonvertierter Anteil, nach Filtern herausgeführt werden, was vor allen Dingen die Effizienz steigert, da dann auch die durch den Kristall im Summenfrequenzmischer 70 bei der Bildung der Summenfrequenz unkonvertierten Photonen zur Erhöhung der Lichtintensität des Lichtbündels 66 ausgenutzt werden.

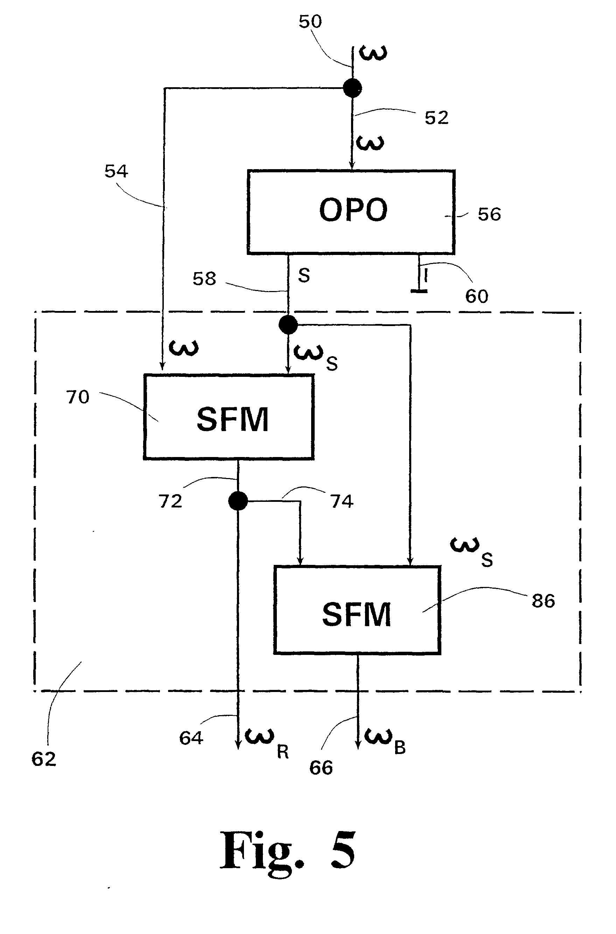

In Fig. 5 ist ein weiteres Beispiel dafür gezeigt, daß einzig der Signalstrahl 58 und nicht der Idlerstrahl 60 zur Bildung der Lichtbündel 64 und 66 eingesetzt wird. Gegenüber dem Beispiel von Fig. 4 unterscheidet es sich dadurch, daß die Einrichtung 62 nur zwei nichtlineare optische Elemente enthält, nämlich einmal den Summenfrequenzmischer 70 und einen zweiten Summenfrequenzmischer 86. Im Unterschied zu Fig. 4 wird hier dem zweiten Summenfrequenzmischer 86 ein Teilstrahl des Signalstrahls 58 und ein Teilstrahl des von dem Summenfrequenzmischer 70 erzeugten Lichtbündels 72 zugeführt. Auch hier gilt $N_B = 1$, $M_B = 2$ wie im Beispiel von Fig. 4. Auf weitere Bauelemente, wie den Frequenzverdoppler 80, kann bei diesem Beispiel verzichtet werden, da das Teillichtbündel 74 aus dem Summenfrequenzmischer 70 als Teillichtbündel entnommen wird und das Teillichtbündel 74 schon die Summenfrequenz $\omega + \omega_S$ enthält.

Für die Teilung des Lichtbündels 72 in die Lichtbündel 74 und 64 wird auf die vorherigen Ausführungen bei Fig. 3 Bezug genommen. Insbesondere ist die optische Teilung durch das Erfordernis einer hohen Weißleuchtleistung bei einem Videoprojektionssystem gemäß Fig. 1 bestimmt.

In Fig. 6 ist ferner beispielhaft gezeigt, wie man gleichzeitig mit dem zur Anregung des OPOs eingesetzten Primärlichtbündels 50 auch ein grünes Lichtbündel 90 erzeugen kann. Dabei wird ein vom Laser 46 erzeugter Laserstrahl 92 durch einen nichtlinearen optischen Kristall 94 hindurchgeführt. Aufgrund der optischen Nichtlinearität des Kristalls entstehen sowohl Oberwellen mit der Frequenz $2\omega$ als auch die Grundwelle mit der Frequenz $\omega$. Über einen Filter 96, beispielsweise einen dichroitischen Spiegel, läßt sich dann ein Lichtbündel 90 mit der doppelten Frequenz und die Grundwelle als Primärlichtbündel 50 zur Anregung des OPOs 56 ableiten, das für die Erzeugung des Signal- und Idlerstahls 58 und 60 weiterverwendet wird.

Das Lichtbündel 90 ist frequenzmäßig so gewählt, daß damit das grüne Lichtbündel erzeugbar ist. Bei grünen Wellenlängen zwischen 510 und 540 nm ergibt sich dann für den anregenden Laser eine Wellenlänge von 1020 bis 1080 nm, so daß der Laser aufgrund dieses Frequenzbereiches beispielsweise ein modengekoppelter Nd:YLF Laser sein kann.

Dieser Laser 46 sollte möglichst kurzzeitig, in der Größenordnung von unter 10 ps, gepulst werden, damit sich eine möglichst hohe Leistungsdichte pro Puls ergibt und eine möglichst hohe Effizienz aufgrund nichtlinearer Mischung im Kristall 94 erreicht wird.

Die Kombination der Ausführungsbeispiele von Fig. 5 und Fig. 6 eignet sich besonders gut für eine Vorrichtung zum Betrieb eines Videogerätes nach Fig. 1, da dabei nicht nur eine minimale Anzahl von Kristallen zum Erzeugen der drei Lichtbündel erforderlich ist, sondern auch nur eine minimale Anzahl von optischen Elementen zur Strahlführung eingesetzt werden kann.

Für die Ausführungsbeispiele gemäß Fig. 3 bis Fig. 6 wird die Tabelle I beigefügt, in der verschiedene einsetzbare Materialien für die entsprechenden Kristalle aufgeführt sind. Die erste Spalte der Tabelle I führt dabei jeweils die eingesetzten nichtlinearen, optischen Elemente auf, wobei für einige die Bezugzeichen und die Figuren angegeben sind, auf die sich der entsprechende optische Kristall bezieht. Die zweite Spalte führt die jeweiligen Wellenlängenkonversionen auf. Alle dort angegebenen Konversionen beziehen sich auf eine Realisierung des roten und blauen Lichtbündels zur Videoprojektion, bei der ein Nd:YVO$_4$ Festkörperlaser mit der Wellenlänge von 1064,3 nm als Laser 46 eingesetzt ist. Die nächste Spalte führt die Wellenlänge des roten bzw. blauen Lichtbündels auf. Anschließend sind in einer weiteren Spalte mögliche nichtlineare optische Kristalle aufgelistet. Die nichtlinearen Kristalle wurden dabei mit folgenden, im Stand der Technik häufig verwendeten Abkürzungen bezeichnet:

| LBO | = | LiB$_3$O$_5$ | = | Lithiumtriborat |
|---|---|---|---|---|
| | | KNbO$_3$ | = | Kaliumniobat |
| | | LiNbO$_3$ | = | Lithiumniobat |
| Banana | = | Ba$_2$NaNb$_5$O$_{15}$ | = | Bariumnatriumniobat |
| BBO | = | beta-BaB$_2$O$_4$ | = | Beta- Bariumborat |
| KTA | = | KTiOAsO$_4$ | = | Kaliumtitanoxidarsenat |
| KTP | = | KTiOPO$_4$ | = | Kaliumtitanoxidphosphat |
| RTP | = | RbTiOPO$_4$ | = | Rubidiumtitanoxidphosphat |
| RTA | = | RbTiOAsO$_4$ | = | Rubidiumtitanoxidarsenat |
| CTA | = | CsTiOAsO$_4$ | = | Cäsiumtitanoxidarsenat |

Die nächsten Spalten bezeichnen die physikalischen Parameter der Kristalle für die gewünschten Wellenlängen, wobei unter "Winkel" der Winkel zur Ausbreitungsrichtung des anregenden Laserlichts gegen die Kristallachse bzw. die Kristallachsen eingetragen ist. Mit "Ebene" ist die Hauptebene der biaxialen optischen zweiachsigen nichtlinearen Kristalle bezeichnet und mit den römischen Ziffern I und II ist wie üblich der Phasenanpassungstyp gekennzeichnet; "o" bedeutet dabei die ordentliche und "e" die außerordentliche (extraordinary) Welle.

Mit "Temp." ist die Temperatur in °C bezeichnet, bei der Phasenanpassung vorliegt. Wenn dabei in der Tabelle die Bezeichnung "RT" eingetragen ist, so ist damit gemeint, daß die aufgeführte nichtlineare Konversion bei Raumtemperatur erfolgen kann.

Die Abkürzung "Fom" steht für "Figure of merit". Diese Größe ist ein Maß für die Stärke der nichtlinearen Wechselwirkung. Sie ist definiert als

$$d_{eff}^2/(n_1 n_2 n_3),$$

wobei $d_{eff}$ der effektive nichtlineare Koeffizient des Kristalls und $n_1$, $n_2$ sowie $n_3$ die Brechungsindizes der beteiligten Wellen sind.

Der in der nachfolgenden Spalte aufgeführte Winkel ist der Walk-off-Winkel. Damit wird der Winkel des Energieflusses der neuen entstehenden Welle bzw. Wellen zur Einstrahlrichtung bezeichnet.

Die folgenden drei Spalten führen die Akzeptanzbreiten für den jeweiligen nichtlinearen Prozeß bezüglich Wellenlänge, Winkel und Temperatur auf. Die Abhängigkeiten der Akzeptanzen von der Länge L des Kristalls sind dabei durch Produktbildung beseitigt.

Die Tabellen in Verbindung mit den Figuren zeigen deutlich die vielfältigen Möglichkeiten zur Realisierung der Erfindung auf. Die dabei erzeugten Laserstrahlen sind zur farbigen Darstellung von Videobildern mit ausreichender Leistung für eine hohe Weißleuchtdichte einsetzbar. Dabei ist die Gesamtleistung der Laserquelle, die bei diesen Alternativen für akzeptable Laserleistungen zur Darstellung von Farbvideobildern zugeführt werden muß, kleiner als 30W, also immer in einem Bereich, der es gestattet, ein Videosystem ohne extremen Kühlaufwand und Regelungsaufwand aufzubauen.

Die Verwendung der Strahlung der Grundwelle und der Signalwelle, die beide im nahen Infrarotbereich mit Wellenlängen kleiner als 2000 nm liegen, zur Generierung von Rot, Grün und Blau ermöglicht die Benutzung von gängigen (Standard-) Komponenten, da diese im Bereich der längerwelligen Idlerstrahlen nicht transparent sein müssen. Insbesondere erlaubt die verwendete Nahinfrarotwellenlänge bei dem hier beschriebenen Verfahren und der Vorrichtung eine größere Auswahl an nichtlinearen optischen Kristallen, da diese für die Rot-, Grün- und Blauerzeugung ebenfalls nur im Nahinfrarotbereich transparent sein müssen. Neben der Energieerhaltung bei den Frequenzkonversionsprozessen muß noch die Impulserhaltung (Phasenanpassung) zur effizienten Erzeugung der neuen Wellen gewährt sein. Für das Verfahren und die Vorrichtung können, wie Tabelle I zeigt, geeignete Kristalle ausgewählt werden, welche die geeigneten physikalischen Eigenschaften besitzen.

Insbesondere läßt das Verfahren und die Vorrichtung auch die Verwendung von nichtlinearen optischen Kristallen der Boratfamilie zu, beispielsweise Beta-Bariumborat (BBO) und Lithiumtriborat (LBO). Da diese Kristalle hinreichend weit UV-transparent sind, ergeben sich mit ihnen keine Probleme bei der Erzeugung des blauen Lichtbündels, da sie Licht von dessen Wellenlänge praktisch nicht absorbieren. Außerdem besitzen die Borat-Kristalle sehr gute mechanische, optische und nichtlinear optische Eigenschaften. Die Erzeugung des blauen Lichtbündels ist damit auch im Bereich von größer als einem Watt mittlerer Ausgangsleistung problemlos möglich.

Mit einem KTA-Kristall sowohl für den OPO als auch den Summenfrequenzmischer 70 und mit einem LBO-Kristall für den Summenfrequenzmischer 86 gemäß Ausführungsbeispiel von Fig. 5 wurde bei einer Lasereingangsleistung von 29 W und einer Wellenlänge von 1064,3 nm eine maximale Leistung von 9 W zur Erzeugung von Weiß erreicht. Insbesondere konnte eine Leistung für das blaue Lichtbündel von bis zu 4 W erzielt werden. Derart hohe Leistungen konnten mit Diodenlasern bisher nicht verwirklicht werden.

Ein System zur Erzeugung von drei Lichtbündeln, wie es vorangehend im einzelnen dargestellt wurde, besteht dabei aus nur wenigen funktionsbestimmenden Elementen, die zudem bei Verwendung der hier beschriebenen Frequenzkonversionsprozesse einen einfachen Aufbau mit wenig Komponenten bedingen, der nur geringen Platz- und Raumbedarf und eine geringe elektrische Eingangsleistung hat. Die funktionsbestimmenden Elemente sind hier das Infrarot-Lasersystem 46, der OPO 56 und die Einrichtung 62, insbesondere mit den Elementen 70, 76, 80, 86 oder 88.

## Tabelle I

| Nichtlin. Element | λ [nm] | λ Rot bzw. Blau [nm] | Kristall | Winkel [Grad] | Ebene | Temp. [°C] | Fom [(pm/V)$^2$] | ρ [Grad] | Δλ·L [nm·cm] | Δθ·L [Grad·cm] | ΔT·L [°C·cm] |
|---|---|---|---|---|---|---|---|---|---|---|---|
| Kristall 94 | | | | | | | | | | | |
| " | 1064 → 532 | | LBO | 0 | xy I (oo-e) | 136,1 | 0,17 | 0 | 3,7 | | 4,9 |
| " | 1064 → 532 | | KNbO$_3$ | 0 | xz I (oo-e) | 157,4 | 14,9 | 0 | 0.25 | | 0,3 |
| " | 1064 → 532 | | LiNbO$_3$ | 90 | I (oo-e) | 132,3 | 2,6 | 0 | 0,3 | | 0,9 |
| " | 1064 → 532 | | Banana | 0 | xy I (ee-o) | 107,8 | 22,3 | 0 | 0,3 | | 0,6 |
| OPO 56 | | | | | | | | | | | |
| .." | 1534 + 3474 | 628 / 461 | KTA | 0 | xy II (e-eo) | RT | 3,1 | 0 | 2,0 (S) / 10,0 (l) | 9,6 | - |
| " | 1571 + 3297 | 634 / 458 | KTP | 0 | xy II (e-eo) | RT | 3,6 | 0 | 2,0 (S) / 8,6 (l) | 7,4 | - |
| .." | 1604 + 3160 | 640 / 455 | RTP | 90 | xy II (e-eo) | RT | 2,0 | 0 | 1,9 (S) / 7,4 (l) | 6,7 | - |
| " | 1690 + 2872 | 653 / 449 | RTP | 0 | xy II (e-eo) | RT | 3,0 | 0 | 2,5 (S) / 7,3 (l) | 6,3 | - |
| .." | 1590 + 3216 | 638 / 457 | RTA | 90 | xy II (e-eo) | RT | 0,9 | 0 | 2,3 (S) / 9,2 (l) | 10,3 | - |
| " | 1628 + 3071 | 643 / 453 | RTA | 0 | xy II (e-eo) | RT | 2,4 | 0 | 2,5 (S) / 8,9 (l) | 10,2 | - |
| " | 1545 + 3420 | 630 / 460 | KNbO$_3$ | 41,8 | xz I (e-oo) | 40,0 | 8,9 | 3,6 | 16 (S) / 16 (l) | 0,02 | 80 |
| SFM 70 | | | | | | | | | | | |
| " | 1064 + 1534 | 628 | KTA | 23,6 | xy II (eo-e) | RT | 2,6 | 0,13 | 1,2 / 15,7 | 0,8 | - |
| " | " | " | KTP | 76,2 | xz II (oe-o) | RT | 3,2 | 1,35 | 1,4 / 28,3 | 0,09 | - |
| " | " | " | RTP | 32,7 | xy II (eo-e) | RT | 2,6 | 0,32 | 1,3 / 62,7 | 0,32 | - |
| " | " | " | LBO | 0 | xy I (oo-e) | 8,6 | 0,17 | 0 | 26 / >100 | | 5,6 |
| " | " | " | LBO | 87 | xz I (ee-o) | 20,0 | 0,17 | ~0,1 | 25 / >100 | 0,35 | 5,6 |
| " | " | " | KNbO$_3$ | 31,3 | xz I (oo-e) | 38,1 | 11,1 | ~3,5 | 0,5 / 0,74 | 0,012 | 1,6 |

**Fortsetzung Tabelle 1**

| Nichtlin. Prozeß | λ [nm] | λ Rot bzw. Blau [nm] | Kristall | Winkel [Grad] | Ebene | Temp. [°C] | Fom [(pm/V)²] | ρ [Grad] | Δλ·L [nm·cm] | Δθ·L [Grad·cm] | ΔT·L [°C·cm] |
|---|---|---|---|---|---|---|---|---|---|---|---|
| SFM 86/Fig.4 | | | | | | | | | | | |
| " | 767 + 1064 | 446 | KNbO$_3$ | 90 | xy I (oo-e) | 105,3 | 10,9 | 0 | 0,1 / 0,13 | | 0,16 |
| " | " | " | KNbO$_3$ | 48,9 | yz I (ee-o) | RT | 10,1 | 1,1 | 0,19 / 0,27 | 0,06 | 0,3 |
| " | " | " | LBO | 22,3 | xy I (oo-e) | 40,0 | 0,15 | 0,75 | 2,3 / 3,3 | 0,05 | 5,3 |
| " | " | " | LBO | 23,5 | yz II (eo-o) | RT | 0,25 | 0,39 | 8,3 / 2,2 | 0,36 | 6,5 |
| " | " | " | BBO | 26,0 | I (oo-e) | RT | 0,95 | 3,6 | 1,4 / 2,0 | 0,011 | - |
| SHG 88 | | | | | | | | | | | |
| " | 1534 → 767 | | LBO | 0 | xy I (oo-e) | 77,4 | 0,17 | 0 | >100 | | 6,5 |
| " | 1534 → 767 | | KNbO$_3$ | 38,2 | xz I (oo-e) | 40,0 | 10,5 | 3,7 | 1,6 | 0,014 | |
| " | 1534 → 767 | | KNbO$_3$ | 23,1 | xy I (oo-e) | 40,0 | 2,1 | 2,1 | 1,7 | 0,02 | |
| " | 1534 → 767 | | KTP | 54,0 | xz II (oe-o) | RT | 2,1 | 2,7 | 4,8 | 0,05 | |
| " | 1534 → 767 | | CTA | 10,1 | xy II (eo-e) | RT | 1,7 | 0,16 | 4,0 | 0,74 | |
| SFM 86/Fig.5 | | | | | | | | | | | |
| " | 628,5 + 1535 | 446 | KTP | 69,2 | xz II (eo-o) | RT | 2,8 | 2,2 | 0,5 / 0,8 | 0,046 | - |
| " | " | " | RTP | 79,6 | xz II (eo-o) | RT | 2,6 | 1,15 | 0,45 / 0,74 | 0,086 | - |
| " | " | " | KTA | 75,9 | xz II (eo-o) | RT | 2,6 | 1,5 | 0,5 / 0,7 | 0,063 | - |
| " | " | " | RTA | 40,0 | xy II (oe-e) | RT | 1,55 | 0,39 | 0,6 / 0,75 | 0,212 | - |
| " | " | " | LBO | 18,2 | xy II (oo-e) | RT | 0,3 | 0,6 | 2,4 / 7,1 | 0,129 | 5,0 |
| " | " | " | BBO | 24,4 | I (oo-e) | RT | 0,98 | 3,4 | 1,4 / 3,75 | 0,023 | - |

**EP 0 904 561 B1**

**Patentansprüche**

1. Verfahren zum Erzeugen eines roten, grünen und blauen Lichtbündels (64, 66, 90), insbesondere für eine farbige Bilddarstellung, von denen das rote und blaue Lichtbündel (64, 66) mit einem OPO (56) (optisch-parametrischen Oscillator) sowie einem ersten und einem zweiten nichtlinearen optischen Bauelement (70; 76, 86) gewonnen werden, wobei das grüne Lichtbündel (90) durch Frequenzvervielfachung aus einem Primärlichtbündel (92) oder einem Teil von diesem gewonnen und vom Primärlichtbündel (92) mindestens ein Teillichtbündel (52) getrennt wird, mit dem der OPO (56) derart angeregt wird, daß ein Signalstrahl (58) und ein Idlerstrahl (60) erzeugt werden, wobei das rote Lichtbündel (64) durch Frequenzmischung vom Signalstrahl (58) und einem anderen Teillichtbündel (54) des Primärlichtbündels (92) mittels des ersten Bauelements (70) gewonnen wird **dadurch gekennzeichnet, daß** das blaue Lichtbündel (66) durch Frequenzmischung eines Teillichtbündels (74) des roten Lichtbündels (64) mit entweder dem Signalstrahl (58) oder einem frequenzverdoppelten Idlerstrahl (78) mittels dem zweiten Bauelement (76; 86) gewonnen wird.

2. Verfahren nach Anspruch 1, **dadurch gekennzeichnet, daß** das Primärlichtbündel (92) zur Frequenzvervielfachung durch einen nichtlinearen optischen Kristall (94) geleitet wird, dem ein Lichtbündel mit der Frequenz des Primärlichtbündels (92) als Teillichtbündel (50) zur Anregung des OPO (56) sowie ein Lichtbündel (90) mit der doppelten Frequenz als das grüne Lichtbündel (90) für die farbige Bilddarstellung entnommen werden.

3. Vorrichtung zum Erzeugen eines roten, grünen und blauen Lichtbündels (64, 66, 90), insbesondere für eine farbige Bilddarstellung, wobei die Vorrichtung einen Laser (46) zum Erzeugen eines Primärlichtbündels (92), einen OPO (56), dem nach Anregung mittels eines Teillichtbündels (52) des Primärlichtbündels (92) ein Signal- und ein Idlerstrahl (58, 60) entnehmbar sind, eine ein erstes und ein zweites nichtlineares optisches Bauelement aufweisende Optikeinrichtung (62) sowie einen nichtlinearen optischen Kristall (94) umfaßt, in den ein weiteres Teillichtbündel des Primärlichtbündels (92) oder dieses selbst einfällt, wobei aufgrund des nichtlinearen optischen Verhaltens des Kristalls (94) entstehendes Licht in einen wellenlängenselektiven Filter (96) eingeleitet ist, mit dem das grüne Lichtbündel (90) zur farbigen Bilddarstellung ausgefiltert wird, wobei das rote Lichtbündel (64) in der Optikeinrichtung (62) ausschließlich aus einem weiteren Teillichtbündel (54) des Primärlichtbündels (92) und dem Signatstraht (58) durch Frequenzmischung mittels des ersten Bauetements (70) erzeugbar ist, **dadurch gekennzeichnet, daß** das blaue Lichtbündel (66) in der Optikeinrichtung (62) ausschließlich von einem Teillichtbündel (74) des roten Lichtbündels (64) und entweder dem Signalstrahl (58) oder einem frequenzverdoppelten Idlerstrahl (60) durch Frequenzmischung mittels dem zweiten Bauelement (76; 86) erzeugbar ist.

4. Vorrichtung nach Anspruch 3, **dadurch gekennzeichnet, daß** durch den Filter (96) oder einen weiteren Filter aus dem vom nichtlinearen optischen Kristall (94) kommendem Licht ein weiteres Lichtbündel (50) entnommen wird, das als das Teillichtbündel (52) zur Anregung des OPO (56) verwendet und/oder als das weitere Teillichtbündel (54) des Primärlichtbündels (92) in die Optikeinrichtung (62) eingeleitet ist.

5. Vorrichtung nach Anspruch 3 oder 4, **dadurch gekennzeichnet, daß** der OPO (56) einen Kristall aufweist, mit dem ein infraroter Idlerstrahl (60) erzeugbar ist, und daß ausschließlich der Signalstrahl (58) des OPO (56) und ein Teillichtbündel (54) des Primärlichtbündels (92) in die Optikeinrichtung (62) eingeleitet sind.

6. Vorrichtung nach einem der Ansprüche 3 bis 5, **dadurch gekennzeichnet, daß** der Laser (46) Licht einer Wellenlänge zwischen 1020 und 1080 nm emittiert.

7. Vorrichtung nach einem der Ansprüche 3 bis 6, **dadurch gekennzeichnet, daß** das erste Bauelement der Optikeinrichtung (62) ein erster Summenfrequenzmischer (70) ist, in den zumindest ein Teillichtbündel des Signalstrahls (58) des OPO (56) sowie das weitere Teillichtbündel (54) des Primärlichtbündels (92) eingeleitet sind, und daß aus dem ersten Summenfrequenzmischer (70) das rote Lichtbündel (64) entnommen wird.

8. Vorrichtung nach Anspruch 7, **dadurch gekennzeichnet, daß** das zweite Bauelement der Optikeinrichtung (62) ein zweiter Summenfrequenzmischer (76; 86) ist, in den das Teillichtbündel (74) des roten Lichtbündels (64) sowie entweder der Signalstrahl (58), ein Teillichtbündel des Sigrialstrahls (58) oder der frequenzverdoppelte Idlerstrahl eingeleitet ist, wobei aus dem zweiten Summenfrequenzmischer (76; 86) ausgangsseitig das blaue Lichtbündel (66) entnehmbar ist.

9. Vorrichtung nach Anspruch 7 oder 8, **dadurch gekennzeichnet, daß** die Optikeinrichtung einen Frequenzverdoppler (80) aufweist, in den zumindest ein Teillichtbündel des Idlerstrahls (60) einfällt und der ein frequenzverdoppeltes Lichtbündel abgibt, das als der frequenzverdoppelte Idlerstrahl (60) in das zweite Bauelement (76) eingeleitet ist.

10. Vorrichtung nach einem der Ansprüche 3 bis 9, **dadurch gekennzeichnet, daß** bei einer Teilung in Teillichtbündel (52, 54, 74, 64) der jeweilige Anteilfaktor für eine maximale Leistung zur Darstellung von Weiß bei Mischung der mindestens drei Lichtbündel (64, 66, 90) zur farbigen Bilddarstellung bestimmt ist.

**Claims**

1. Process for generating a red, a green and a blue light bundle (64, 66, 90), especially for displaying color images, of which the red and the blue light bundles (64, 66) are obtained with an OPO (56) (opto-parametric oscillator) as well as with first and second nonlinear optical elements (70; 76, 86), the green light bundle (90) being obtained by frequency multiplication from a primary light bundle (92) or part thereof, and at least one partial light bundle (52) being separated from the primary light bundle (50) for exciting the OPO (56) such that a signal beam (58) and an idler beam (60) are generated, wherein the red light bundle (64) is obtained by frequency mixing from the signal beam (58) and from another partial light bundle (54) of the primary light bundle (92) by means of the first element (70), **characterized in that** the blue light bundle (66) is obtained by frequency mixing of a partial light bundle (74) of the red light bundle (64) with either the signal beam (58) or a frequency-doubled idler beam (78) by means of the second element (76; 86).

2. Process according to claim 1, **characterized in that**, for frequency multiplication, the primary light bundle (92) is guided through a nonlinear optical crystal (94), from which a light bundle having the frequency of the primary light bundle (92) is taken as a partial light bundle (50) for excitation of the OPO (56) and a light bundle (90) having double the frequency is taken as the green light bundle (90) for color image display.

3. Apparatus for generating a red, a green and a blue light bundle (64, 66, 90), especially for displaying color images, said apparatus comprising a laser (46) for generating a primary light bundle (92), an OPO (56) from which a signal beam and an idler beam (58, 60) can be taken after excitation by means of a partial light bundle (52) of the primary light bundle (92), an optical device (62) having first and second nonlinear optical elements, as well as an optical crystal (94), into which a further partial light bundle of the primary light bundle (92), or the primary light bundle (92) itself, enters, wherein light generated due to the nonlinear behaviour of the crystal (94) is guided into a wavelength-selective filter (96), using which the green light bundle (90) is filtered out for color image display, wherein the red light bundle (64) can be generated in the optical device (62) exclusively from a further partial light bundle (54) of the primary light bundle (92) and the signal beam (58) by frequency mixing using the first element (70), **characterized in that** the blue light bundle (66) can be generated in the optical device (62) exclusively from a partial light bundle (74) of the red light bundle (64) and either the signal beam (58) or a frequency-doubled idler beam (60) by frequency mixing using the second element (76; 86).

4. Apparatus according to claim 3, **characterized in that** another light bundle (50) is taken from the light coming from the nonlinear optical crystal (94) by means of the filter (96) or another filter, which light bundle (50) is used as the partial light bundle (52) for exciting the OPO (56) and/or is introduced as the further partial light bundle (54) of the primary light bundle (92) into the optical device (62).

5. Apparatus according to claim 3 or 4, **characterized in that** the OPO (56) has a crystal by which an infrared idler beam (60) can be generated, and **in that** exclusively the signal beam (58) of the OPO (56) and a partial light bundle (54) of the primary light bundle (92) are introduced into the optical device (62).

6. Apparatus according to one of claims 3 to 5, **characterized in that** the laser (46) emits light with a wavelength of between 1020 nm and 1080 nm.

7. Apparatus according to one of claims 3 to 6, **characterized in that** the first element of the optical device (62) is a first sum frequency mixer (70), into which at least one partial light bundle of the signal beam (58) of the OPO (56) as well as the further partial light bundle (54) of the primary light bundle (92) are introduced, and **in that** the red light bundle (64) is taken from the first sum frequency mixer (70).

8. Apparatus according to claim 7, **characterized in that** the second element of the optical device (62) is a second sum frequency mixer (76; 86), into which the partial light bundle (74) of the red light bundle (64) as well as either the signal beam (58), a partial light bundle of the signal beam (58) or the frequency-doubled idler beam is introduced, wherein the blue light bundle (66) can be taken from the output side of the second sum frequency mixer (76; 86).

9. Apparatus according to claim 7 or 8, **characterized in that** the optical device has a frequency doubler (80) into which at least one partial light bundle of the idler beam (60) enters and which emits a frequency-doubled light bundle which is introduced into the second element (76) as the frequency-doubled idler beam (60).

10. Apparatus according to one of claims 3 to 9, **characterized in that**, when splitting into partial light bundles (52, 54, 74, 64), the respective proportion factor is determined for a maximum output for displaying white when mixing the at least three light bundles (64, 66, 90) for displaying color images.

**Revendications**

1. Procédé pour produire un faisceau lumineux rouge, vert et bleu (64, 66, 90), notamment pour une représentation couleur, parmi lesquels les faisceaux lumineux rouge et bleu (64, 66) sont obtenus par un oscillateur opto-paramétrique (OPO) (56) ainsi que par un-premier et un deuxième composant optique non linéaire (70 ; 76, 86), alors que le faisceau lumineux vert (90) est obtenu par une multiplication de fréquences à partir d'un faisceau lumineux primaire (92) ou d'une partie de celui-ci et qu'au moins un faisceau lumineux partiel (52) est séparé du faisceau lumineux primaire (92) avec lequel l'oscillateur opto-paramétrique (56) est activé de telle manière qu'un rayon transmetteur de signaux (58) et un rayon passif (60) soient produits, et alors que le faisceau lumineux rouge (64) est obtenu à l'aide du premier composant (70) par un mélange de fréquences du rayon transmetteur de signaux (58) et d'un autre faisceau lumineux partiel (54) du faisceau lumineux primaire (92), **caractérisé en ce que** le faisceau lumineux bleu (66) est obtenu à l'aide du deuxième composant (76 ; 86) par un mélange de fréquences d'un faisceau lumineux partiel (74) du faisceau lumineux rouge (64) avec soit le rayon transmetteur de signaux (58) soit un rayon passif (78) doublé en fréquence.

2. Procédé selon la revendication 1, **caractérisé en ce que**, pour la multiplication des fréquences, le faisceau lumineux primaire (92) est dirigé à travers un cristal optique non linéaire (94) dans lequel sont prélevés, en tant que faisceau lumineux partiel (50) pour l'activation de l'oscillateur opto-paramétrique (56), un faisceau lumineux ayant la fréquence du faisceau lumineux primaire (92) ainsi que, pour la représentation couleur, un faisceau lumineux (90) ayant une fréquence du double de celle du faisceau lumineux vert (90).

3. Dispositif pour produire un faisceau lumineux rouge, vert et bleu (64, 66, 90), notamment pour une représentation couleur, le dispositif comprenant un laser (46) pour produire un faisceau lumineux primaire (92), un oscillateur opto-paramétrique (56) dans lequel peuvent être prélevé, après une activation à l'aide d'un faisceau lumineux partiel (52) du faisceau lumineux primaire (92), un rayon transmetteur de signaux et un rayon passif (58, 60), un dispositif optique (62) comprenant un premier et un deuxième composant optique non linéaire ainsi qu'un cristal optique non linéaire (94) dans lequel arrivent en incidence un autre faisceau lumineux partiel du faisceau lumineux primaire (92) ou ce faisceau lumineux primaire lui-même, alors que de la lumière produite du fait du comportement optique non linéaire du cristal (94) est introduite dans un filtre sélectif au niveau des longueurs d'ondes (96), avec lequel le faisceau lumineux vert (90) est éliminé par filtrage pour la représentation couleur, et alors que le faisceau lumineux rouge (64) peut être produit dans le dispositif optique (62) exclusivement à partir d'un autre faisceau lumineux partiel (54) du faisceau lumineux primaire (92) et du rayon transmetteur de signaux (58) par un mélange de fréquences à l'aide du premier composant (70), **caractérisé en ce que** le faisceau lumineux bleu (66) peut être produit dans le dispositif optique (62) exclusivement à partir d'un faisceau lumineux partiel (74) du faisceau lumineux rouge (64) et soit du rayon transmetteur de signaux (58) soit d'un rayon passif (60) doublé en fréquence par un mélange de fréquences à l'aide du deuxième composant (76 ; 86).

4. Dispositif selon la revendication 3, **caractérisé en ce que** le filtre (96) ou un autre filtre prélève à partir d'une lumière provenant du cristal optique non linéaire (94) un autre faisceau lumineux (50) qui est utilisé comme faisceau lumineux partiel (52) pour l'activation de l'oscillateur opto-paramétrique (56) et/ou qui est introduit dans le dispositif optique (62) en tant que l'autre faisceau lumineux partiel (54) du faisceau lumineux primaire (92).

5. Dispositif selon la revendication 3 ou la revendication 4, **caractérisé en ce que** l'oscillateur opto-paramétrique (56) comprend un cristal avec lequel peut être produit un rayon passif infrarouge (60) et **en ce que** seuls le rayon transmetteur de signaux (58) de l'oscillateur opto-paramétrique (56) et un faisceau lumineux partiel (54) du faisceau lumineux primaire (92) sont introduits dans le dispositif optique (62).

6. Dispositif selon l'une quelconque des revendications 3 à 5, **caractérisé en ce que** le laser (46) émet une lumière d'une longueur d'ondes entre 1020 et 1080 nm.

7. Dispositif selon l'une quelconque des revendications 3 à 6, **caractérisé en ce que** le premier composant du dispositif optique (62) est un premier mélangeur de fréquences totalisateur (70) dans lequel sont introduits au moins un faisceau lumineux partiel du rayon transmetteur de signaux (58) de l'oscillateur opto-paramétrique (56) ainsi que l'autre faisceau lumineux partiel (54) du faisceau lumineux primaire (92) et **en ce que** le faisceau lumineux rouge (64) est prélevé du premier mélangeur de fréquences totalisateur (70).

8. Dispositif selon la revendication 7, **caractérisé en ce que** le deuxième composant du dispositif optique (62) est un deuxième mélangeur de fréquences totalisateur (76 ; 86) dans lequel est introduit le faisceau lumineux partiel (74) du faisceau lumineux rouge (64) ainsi que soit le rayon transmetteur de signaux (58), soit un faisceau lumineux partiel du rayon transmetteur de signaux (58), soit le rayon passif doublé en fréquence, alors qu'à la sortie du deuxième mélangeur de fréquences totalisateur (76 ; 86) peut être prélevé le faisceau lumineux bleu (66).

9. Dispositif selon la revendication 7 ou la revendication 8, **caractérisé en ce que** le dispositif optique comprend un doubleur de fréquences (80) dans lequel pénètre au moins un faisceau lumineux partiel du rayon passif (60) et qui délivre un faisceau lumineux doublé en fréquence qui est introduit dans le deuxième composant (76) en tant que rayon passif (60) doublé en fréquence.

10. Dispositif selon l'une quelconque des revendications 3 à 9, **caractérisé en ce que**, dans le cas d'une division en faisceaux lumineux partiels (52, 54, 74, 64), le facteur de quote-part respectif est déterminé pour une puissance maximale pour une représentation du blanc avec un mélange au moins des trois faisceaux lumineux (64, 66, 90) pour une représentation couleur.

Fig.1

LASER 1 — rot → Modulator (12) →
LASER 2 — grün → Modulator (22) →
LASER 3 — blau → Modulator (32) →

10 / 20 / 30 — Laser

40 / 45

Ablenk-system (42)
(zweidimensional)

44

EP 0 904 561 B1

Fig. 2

**Fig. 3**

**Fig. 4**

**Fig. 5**

**Fig. 6**